(19) Europäisches Patentamt
European Patent Office
Office européen des brevets

(11) Publication number: 0 335 737 A2

(12) # EUROPEAN PATENT APPLICATION

(21) Application number: 89303209.4

(22) Date of filing: 31.03.89

(51) Int. Cl.⁴: G 09 B 19/02

(30) Priority: 31.03.88 GB 8807647

(43) Date of publication of application: 04.10.89 Bulletin 89/40

(84) Designated Contracting States: AT BE CH DE ES FR GB GR IT LI LU NL SE

(71) Applicant: THE OPEN UNIVERSITY
P.O. Box 77 Walton Hall
Milton Keynes Buckinghamshire MK7 6BT (GB)

(72) Inventor: Fox, Michael Edward
Flat 4, Tapton House Spinney 18 Tapton House Road
Sheffield South Yorkshire S3 8GP (GB)

(74) Representative: Thomson, Roger Bruce et al
POLLAK MERCER & TENCH Eastcheap House Central Approach
Letchworth Hertfordshire SG6 3DS (GB)

(54) **Computational aid.**

(57) A computational aid, especially for teaching children calculations in a visual way, comprises a visual display area (6,7,8,11) and key-actuated means (10) to display on the visual display area information concerning any selected calculation in at least one non-digital representational mode. By demonstrating the same calculation with different visual concrete representational modes, e.g. counting blocks, number lines and finger counting, as well as with number symbols, the user can see the connection between number symbols and realistic situations. The device is preferably utilisable in three modes; a demonstration mode, a game mode and a tool mode in which minimal mental effort is required to obtain a numerical answer.

FIG.2.

Spare line
Number line
Calculator slot
Mental arithmetic window
Calculation blocks window
Clickometer
Finger line
Keyboard

EP 0 335 737 A2

**Description**

## COMPUTATIONAL AID

This invention relates to computational devices, and in particular to computational devices for use in teaching, especially of children.

Some children find arithmetic difficult because they do not have a sufficient understanding of how to relate numbers and operations together. For example they may not realise that the same formal calculation may be carried out using different conceptual methods. Similarly they may not be able to interpret numerical problems involving computation. Another problem which arises is that children may be able to manipulate numbers without connecting them to what they may represent in the world and to what the children know from their own informal invented methods of calculation. A given type of logical problem is in fact more easily solved in human than in an abstract context and logical thinking in a human context is different from and much easier than formal logic. This is also likely to apply to mathematical problems, though of course formal mathematical methods are more widely applicable.

A principal object of this invention is to overcome such problems in order to facilitate understanding of arithmetic.

According to one aspect of the invention there is provided a computational device comprising a visual display area and electronic means to display on the visual display area information concerning any selected calculation in at least one non-digital representational mode. Thus the device can be used to see the calculation in terms which are more easily understood by the user than mere numerals; this is especially advantageous for teaching children arithmetic.

Preferably key means are provided to select the representational mode to be displayed from a plurality of modes, which may include digital representation. The user may therefore choose the representational mode in which the information concerning the calculation is displayed.

This is a highly advantageous educational aid for children since they may be taught about the selected calculation visually. This may be done in different ways according to their level of knowledge and understanding. The different representational modes may be graded in difficulty.

The representational mode(s) may comprise one or more different symbolic forms, such as counting blocks, number lines, finger counting, and number symbols or any other symbolic form which can be conceptualised by children. Any or all of the representational modes may be used simultaneously according to a further feature of the invention. In a modification each representation may be altered by one of appropriate keys to represent larger or smaller numbers more conveniently (i.e. a sort of zooming).

The information displayed is preferably the calculation itself. Thus, the representational mode or modes may comprise one or more different demonstrations, such as a demonstration of the steps in obtaining the answer to a calculation or only of the actual calculation equation. In the latter case the device is used as or similarly to an ordinary calculator although it is preferred that the actual answer is illustrated in a form other than digital, so that the user must still employ some thought in considering the displayed information. In this context, elements of the representation, such as some markings on a number line, may be omitted to encourage thought by requiring interpolation and the making of estimations. The representational mode or modes may comprise one or more different demonstrations, each in a different symbolic form.

According to another aspect of the invention there is provided a computational device comprising a visual display area and key-actuated means to demonstrate as a guide on said display area how to carry out any selected calculation. It is an important advantage of both aspects of the invention alone and in combination that arithmetic calculation techniques can be taught by use of the computational device.

The computational device may be in the form of a hand-held calculator or a computer. The display and selection are electronically achieved under the control of appropriate software.

In the case of a computer, the representational mode(s) may include a game mode in which the representations are manipulatable by key means for example to find answers to calculations. The hand-held device may similarly include a game mode. The hand-held calculator comprises a display screen and a set of keys for controlling the device whereas the computer may comprise a computer interface in the form of a visual display unit and a keyboard for controlling the device.

It may be noted that optional but preferred features of the invention include those in the dependent claims.

Further advantages of the invention are as follows:

(a) It can be used in many contexts, e.g.mathematical investigations, drill and practice.

(b) The computational device can help to overcome the following two important objections to conventional digital calculators in the classroom. First by, there is no way accurately to check an answer from a calculator except by re-inputting the calculation or doing some paper or mental arithmetic. A calculator provides less support for understanding how answers are obtained than do standard algorithms for the four arithmetic operations. Second by, a calculator does not provide any support for those teachers and children who want to use the standard algorithms.

(c) As the idea of a calculator has general currency the idea of a helpful computational device that also looks like a calculator should be relatively easy to communicate to teachers and children and will bring with it some clear ideas of what to expect from it and what it can be used for.

(d) However good the teaching most children make very slow progress in learning arithmetic. A helpful computational device which is widely applicable both in time and context can be used to match this slow process because it can be present all the time, year in year out. By the some token children can familiarise themselves with any necessary peculiarities of the software over a long period and will not be required to understand how to use everything quickly.

(e) From (c) the possibility of constructing a hand-held helpful calculator naturally arises. This extends the idea of wide use in time and context.

In a preferred form the computational device of the invention is intended to address many of the problems that children find with arithmetic, especially the tendency to manipulate number symbols without connecting them to what they may represent in the world and to what they know from their informal invented methods of calculation. Examples of these phenomena are subtraction algorithm errors where digits in multidigit numbers are manipulated without apparent reference to the quantities the numbers represent to produce answers at variance with what is known from mental calculation. The computational device allows it to be made clear how the symbolic representation of calculations, formal and informal, relate to each other and to more concrete representations and hence to real world situations in which arithmetic is performed. It will allow users to interact with it in ways that gives them the opportunity and the motivation to make those connections.

The computational device is visual in the sense that partial concretizations of calculations through for example number lines, calculating blocks, etc. are visually represented in the interface and used in formal and informal methods of arithmetic (e.g. mental arithmetic). The partial concretizations and the methods of arithmetic are made available in the computational device for connecting symbols and calculations to real world situations and to what children already know.

The preferred form of the computational device preferably provides the opportunity and motivation to make connections in three modes:-

a) Demonstrations.

The computational device will simulate the typical formal and informal methods by which people find (correct) answers, e.g. standard algorithms, counting methods and mental arithmetic.

b) A game.

Users will be able to play a game in which the interface representations are manipulated to find the answers to calculations.

c) A tool.

The computational device may be usable in place of an ordinary calculator. A mode of interaction in which some critical but minimal mental effort is required to obtain a numerical answer will be provided.

A further opportunity to make connections is in the form of a curriculum of word problems and answers, to assist children in choosing the representational mode and the operation required to solve different kinds of problem.

The computational device may be used by a small cooperating group. For example, when using the computational device in game mode two or more children can work together, such as by alternating equivalent actions in different representational modes. Since the goal of finding the answer is mutual it will be an advantage for the children to discuss their moves as they work together, teaching ability in reflection and talking to others.

Embodiments of the invention are described by way of example, with reference to the drawings, in which:

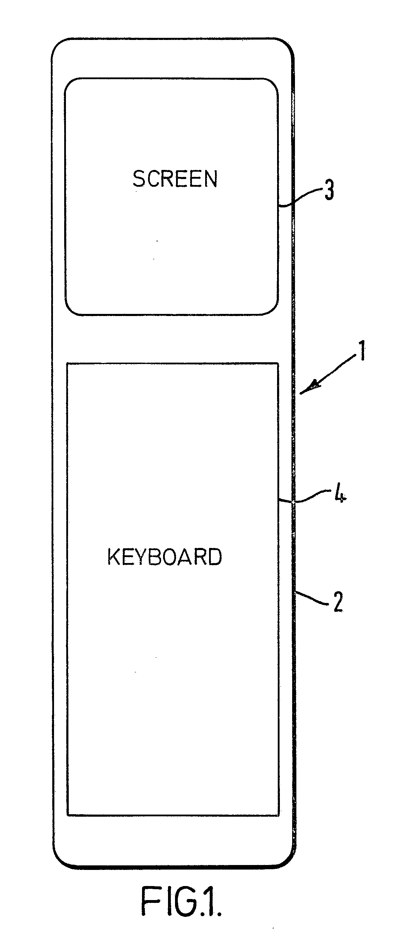

Fig. 1 shows a portable calculator according to the invention. Multiple representations may not be visible together on the small screen available in the hand held form. Instead several hand held devices may be used together, displaying different representations of the same calculation and kept in step. One possible way of keeping these machines in step is to link them together so that they can communicate with each other;

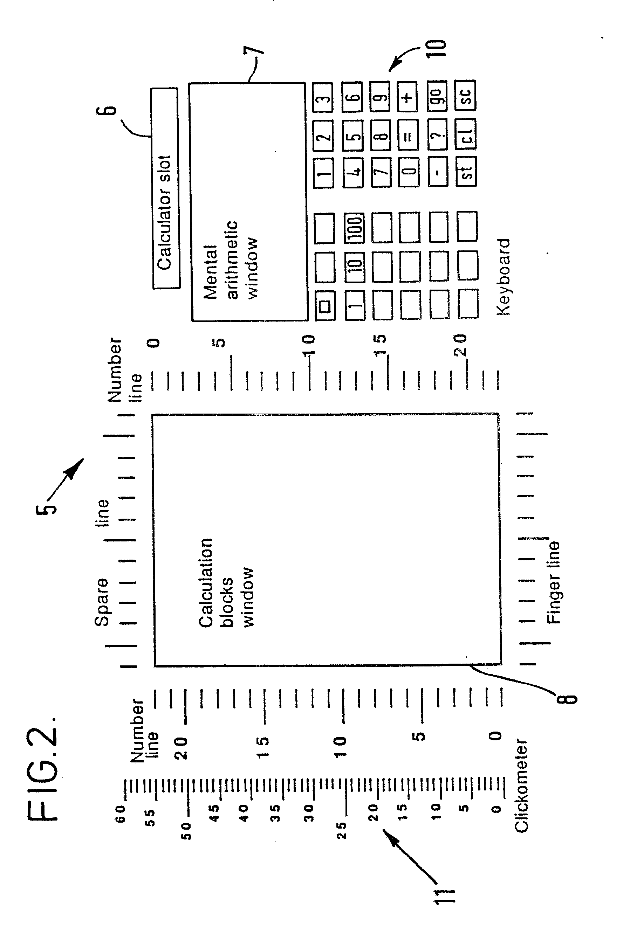

Fig. 2 shows the static parts of a visual display unit and interface of another computational device according to the invention, for addition and subtraction of whole numbers. The named parts are arenas for the explanation and game modes, except for the clickometer which measures the efficiency of calculation according to the number of mouse clicks in game mode or the equivalent actions required by the calculator in explanation mode. The clickometer and any of the representational modes may be present or absent;

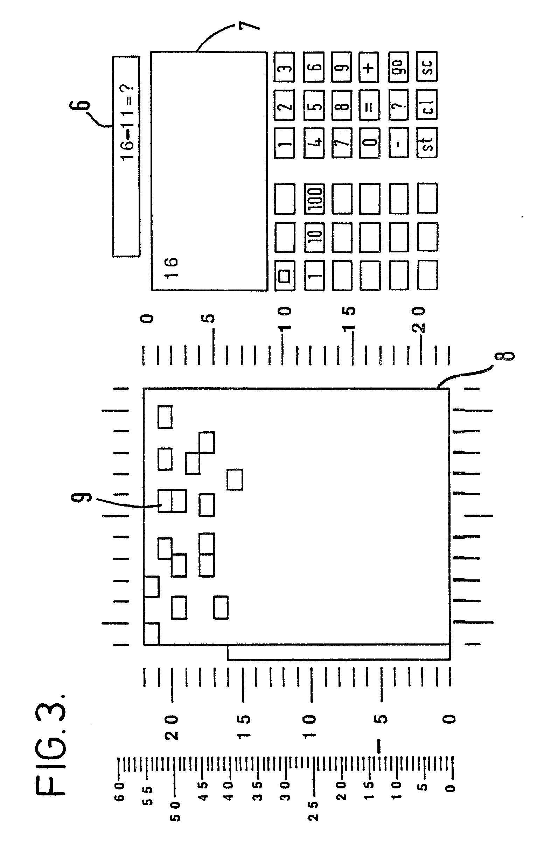

Fig. 3 shows the dynamic aspects of the interface of Figure 2 for the addition and subtraction of whole numbers with the first main step in a simple calculation. In this case the calculating blocks are disordered. This step could occur in demonstration mode and in game mode;

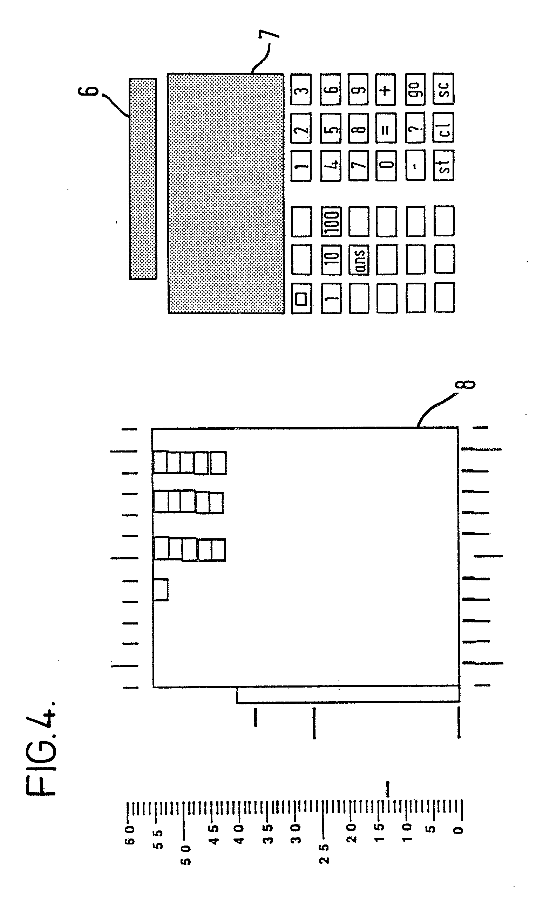

Fig. 4 shows the interface of Figure 2 in tool mode (in this case the blocks are ordered). The numerical representations are absent. The number answer line on the left represents 16 but is not marked, so that some thought is required to interpret the number correctly. The "ans" key will cause the calculator to go straight to the answer configuration in the blocks window and on the number line. A numerical answer can only be obtained by interpreting the non-numerical representations;

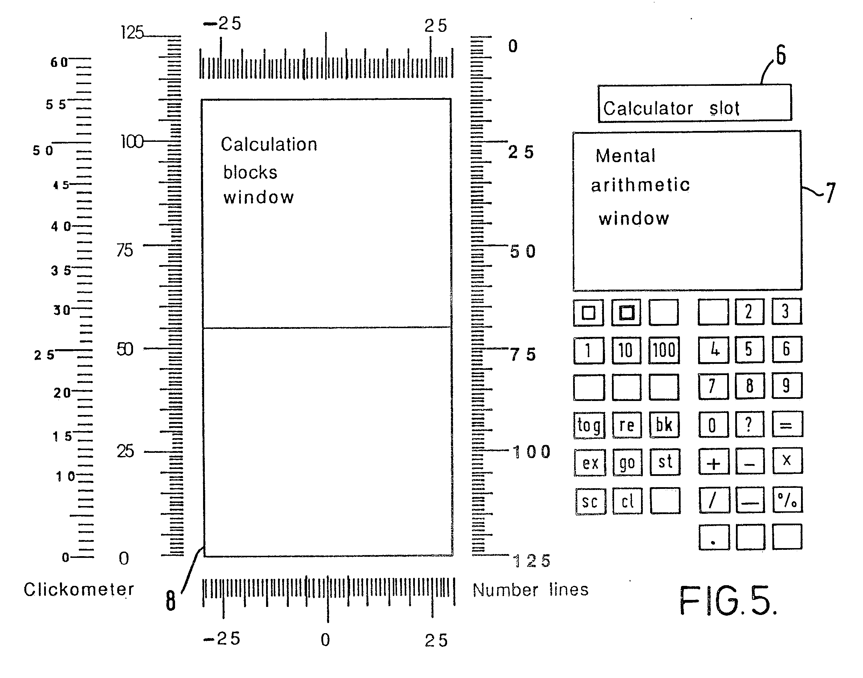

Fig. 5 shows an interface of a second computational device according to the invention; and,

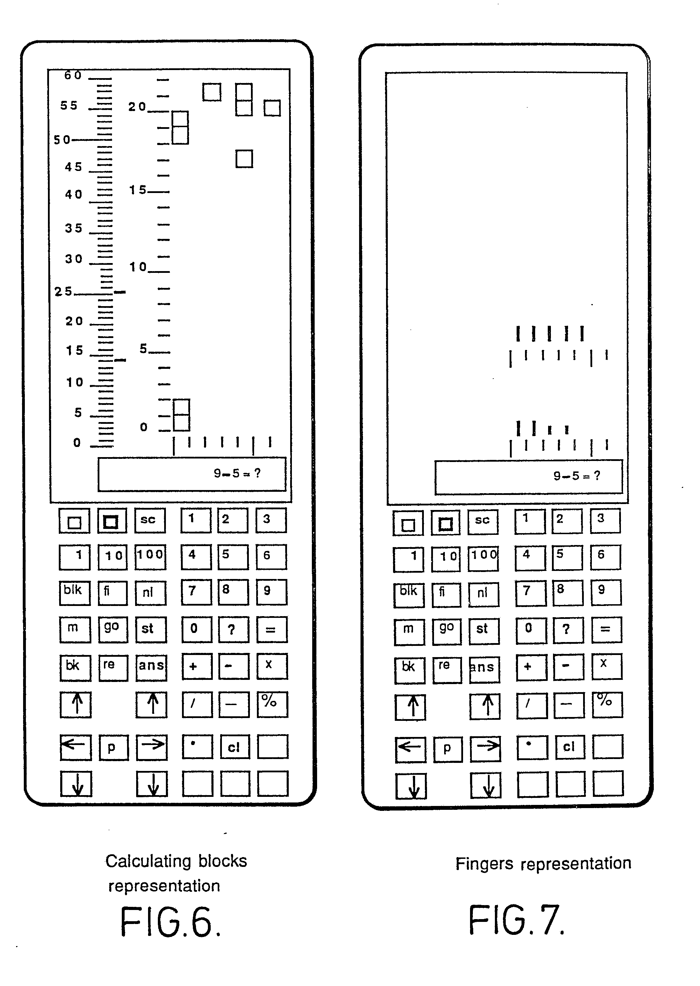

Figs. 6 to 9 indicate one possible form of the device as a hand-held visual calculator, and how it might be used.

A hand-held calculator 1, as shown in Figure 1, is in the form of a portable body 2 incorporating an interface consisting of a display screen 3 and a keyboard region 4 having an array of keys (not shown in this Figure). The display screen is used to display a selected representational mode and certain of the keys can be used to select this. The display is preferably a liquid crystal display.

The interfaces of Figures 2 and 5 are especially for use with a computer although they may be used in a portable calculator, if necessary with minor modifications.

One interface to be used in a computational device according to the invention, typically with a computer, is shown in Figures 2 to 4 and another such interface is shown in Figure 5.

The interface 5 of Figure 2 is employed to demonstrate calculations of the form a + b = c or a - b = c in any or all of the representational modes provided, which use the informal counting methods and mental arithmetic that children develop naturally for themselves. The blocks and the number lines are partial concretizations of real world contexts and the number sentences relate to the kinds of simple word problems young children are called upon to solve, e.g. "Jim had 12 marbles, he gave some to Tim and he has 5 left. How many did he give away?", which becomes 12-? = 5. The interface has three display windows or arenas 6, 7, 8: the first 6 is for the question i.e. digital representation; the second 7 for a method of solution; and the third 8 for a symbolic representation, e.g. two-dimensional counting blocks 9. A keyboard region 10 for control of the device by the user is disposed in the lower right corner. The number keys and operation keys are pressed by the user to input the calculation question, followed by pressing the question mark key, and then the calculation is carried out with the keys.

The finger line is a representation for doing addition and subtraction by finger counting methods. Finger-like bold lines pop up and down according to the counting method employed. The two vertical number lines (Fig.2) can be used in any representation of addition, subtraction, multiplication and division of positive numbers.

The various methods of counting or mental arithmetic for executing a particular calculation can be selected using a clickometer 11 of the computational device; this is called "demonstration mode". Each method is represented as a bar line against a number on the clickometer (see Figs. 3 and 4 for example). This number is also the number of mouse clicks that would be necessary to complete the calculation by hand with the visual computational device. The clickometer is realised on a computer screen as a simulated mouse click counter. In the case of a hand-held device, as shown in Figs. 6 to 9, the equivalent will be a key press counter, hereinafter referred to as a pressometer. In this way a child can choose between slow but easy to understand methods and faster more advanced methods. The contents of the arenas are simply animated. According to which arenas have been opened by the user, the numbers in the mental arithmetic arena, the calculation blocks and the number line representation of number by length, all change in step as the calculation proceeds step by step by the method chosen from the clickometer.

A child can also work actively with the computational device and use the arenas to carry out a calculation by his or her own method and hence compete in "game mode" with the computational device to invent the most efficient way of carrying out the calculation. In this way the motivating effect of computer games is incorporated in the interface. The "demonstration" and "game" modes are also intended to provide the structure which young children need for useful discussion. The visual computational device will also take the place of an ordinary calculator. The demonstrations and games will be optional but a "tool mode" (see Fig. 4), although providing a non-numerical answer immediately, will still require some minimal but critical mental effort to obtain the numerical form. In this way it is hoped to obviate thoughtless use of conventional calculators.

The increased complexity of larger whole numbers has been specifically catered for by incorporating the structure of place value within each representation. This is most clearly shown with the calculating blocks which are available in three denominations, hundreds ("flats"), tens ("rods") and units. In calculating with these concrete representations of numbers the groupings (hundreds and tens) are frequently decomposed and composed showing how they are built up and broken down and showing how each of those steps maps to the other modes, especially the symbolic representations in the mental arithmetic modes. This is designed to help provide a link between symbols and concrete objects.

The concept of cognitive conflict is central to the design. Cognitive conflict is provoked if two situations appear contradictory as when two methods of subtraction are supposed to produce the same result but they do not. Conflict is removed by a process of mental reflection. The idea has been extended to the reconciliation of different methods which produce the same result but where the user does not understand why. Furthermore, cognitive conflict is often provoked in a social situation where a difference of opinion causes a discussion. Much of the advantage of cooperation arises through discussion. In conversing learners may lay out their beliefs, explain themselves, receive criticism, expose errors, confront difficulties, etc., acts they may well not perform themselves. Of special note here is the design of the visual computational device display which incorporates these constructivist ideas of learning and is intended to provoke the emergence of difficulties and misunderstandings especially in the context of a small cooperating group. The representations are then available as objects of reflection.

Thus, when using the computational device in game mode, two children can work together, for example by alternating equivalent actions in different modes (see Fig. 3). Since the goal of finding the answer is mutual it will be an advantage for the children to discuss and reflect on all moves in the representations. The aim is to provide opportunities for the discussion and diagnosis of difficulties both with and without the presence of a teacher. In this it is intended that they should reflect on whether moves before and after they are carried out are truly equivalent. When they are not, the possibility of cognitive conflict arises. For example, while a child working in the mental arithmetic mode might correctly conclude that 38 - 9 = 29, a child working in the blocks mode with three rods (tens) and eight squares (units) might ignore the groupings and remove any nine of the calculating blocks leaving two blocks as the answer (a known error with conventional Diene's blocks). Children will be able to make full use of the multiple representations in the context of a cooperating group with help from a teacher and after some experience of working.

As well as the addition and subtraction of small whole numbers and place value a visual computational device for both primary and secondary schools optionally includes means for:-

(a) multiplication and division

(b) large numbers, i.e. more than a few hundred

(c) decimals to at least two places

(d) directed numbers

(e) percentages

(f) fractions

(g) ratio and proportion.

As shown in Fig. 5 this alternative interface has additions to the above-described keyboard and to the number lines (showing negative numbers) which will support some of those functions. The two horizontal number lines are a means for representing calculations involving negative numbers, as it is conventional to represent negative numbers on a horizontal axis. Since calculations always involve two numbers at a time, two horizontal number lines are required. Below the ? key are two keys marked with horizontal lines. The shorter line means subtract, and the longer line is for keying in fractions. At the top of the keyboard are two keys marked with squares. The key marked with the lighter outline causes the calculation blocks window to use tens rods and hundreds flats that can be broken down into smaller denominations. The key marked with the darker outline causes the calculations blocks window to use tens rods and hundreds flats that cannot be broken down into smaller denominations. If in using these blocks it is required to break a flat down to rods, or a rod to units, then the flat must be exchanged for ten rods, or the rod exchanged for ten units. Other such facilities for involvement of informal calculating and partial concretizations may be similarly provided.

The functions of the left-hand side of the keyboard include some which are specifically included in order to provoke cognitive conflict. The "re" key means replay the user's actions from the start so that he/she can reflect on what he/she has done. The "bk" key means replay the user's actions backwards. The "tog" key is used to enable the user to work together with the computational device. This involves, amongst other things, the computational device modelling an individual step by the user in one mode by making the corresponding step in another.

A curriculum of word problems with answers, e.g. in the form of a book, accompanies the computational device. This is intended to help children with the choice of arithmetic operation. The calculations will be demonstrable on the computational device. The computational device will choose the representation of each problem, although a child will be able to override this, and will also provide a simplified version of the problem which will use small whole numbers or simple fractions in place of the realistic numbers given. This helps children to understand the problem in terms that connect with what they already know, namely concrete models and informal calculating with small whole numbers and simple fractions.

Some support is also included for the use of the standard algorithms for arithmetic because they are very efficient. Many teachers will want to continue teaching them and will expect them to be present in such a computational device. Although many children have difficulty using most of the algorithms and despite the introduction of calculators into schools, experts in mathematics education appear to support their continued presence in classrooms as items of mathematical interest to some children who are well able to handle arithmetic. The computational device of the present invention is designed to help children make connections between what they know from their own methods and real world situations. The addition of formal methods to this scheme so that connections can also be made to them is both sensible and relatively easy.

In a modification each representation may be altered by one of appropriate keys to represent larger or smaller numbers more conveniently, i.e. a sort of zooming. For example the number lines in Fig. 2 may be progressively scaled to become the number lines in Fig. 5 where larger numbers can be represented than in Fig. 2.

It will be appreciated that computational devices according to this invention will be of much assistance in teaching children arithmetic because of the nature of the information and the manner in which it is conveyed to the user. Each computational device can be programmed to provide a preselected variety of displayable information concerning calculations.

The device of the invention especially teaches the user the ability to decide how to carry out calculations, for instance which operation(s) is/are suitable.

In one form of operation, a desired calculation will be keyed into the computational device on the number keys and a desired representational form and/or mode, in which the calculation may be selectively demonstrated by the computational device worked out by the user, selected by adjusting the clickometer. Any one computational device may be programmed to provide representational forms and information for a wide range of levels of understanding and knowledge. The visual interaction between the user and the computational device has been found to involve the user in a stimulating way. The user is taught to conceptualise mathematical/arithmetic problems and how to apply formal and personal arithmetical methods. Several different representational forms may be employed, for example those which are known to entertain children, such as fictional outer-space characters and animals.

The following six Examples illustrate the use of the device described above in relation to Figs. 2 to 5. All user actions at the interface are made by pointing and clicking with the mouse.

Example 1 The execution of a simple calculation.

A child is given the following word problem "Mary had 9 marbles, she gave 5 to John, how many has she left?" The child has been shown how to turn this kind of problem into a number sentence. The arenas 6,7,8 are closed and presented as grey rectangles.

1. One click with the cursor on the calculator slot 6 opens it. A second click makes it the receiving arena for key presses.

2. The child first keys in '9-5=?' by pointing at the keyboard. Then keys 'go'. The answer '4' replaces the '?' mark.

3. If instead the child opens the blocks window 8 with one click of the cursor and then keys 'go', then this indicates that a strategy appropriate to the blocks window is to be selected and executed.

The slowest strategy, namely a direct modelling strategy appropriate to the number sentence, is chosen. (The slowest strategy is the one requiring the fewest actions at the key keyboard. The slowest one is chosen by default if the user does not choose a faster one using the clickometer as explained below). The key flashes, then the '1' key below the key, to indicate unit blocks follow. Thus the '1' on the right of the keyboard in the sequence 0-9 flashes nine times and at each flash a unit appears in the blocks arena 8. In this way an assembly of nine units is built up. Fig. 4 shows an ordered assembly of blocks, but a less efficient version of essentially the same strategy using a disordered assembly may also be included.

4. Five units are then removed one by one from the nine and placed in another ordered collection in another part of the arena. As each unit is moved the computer counts the quantity moved. (Either sound or words in a part of the arena).

5. The remaining four units flash in order one by one as if being counted. As each is counted the computer counts and then '4' replaces the '?' in the calculator slot. This is a demonstration.

Example 2

In this case suppose a child repeats Example 1 using the calculator configured as in Fig. 4 except that the clickometer is closed. The 'ans' key is pressed and the answer is presented on the number lines and in the blocks window. There is no numerical answer, instead the numerical answer must be obtained by interpreting the number lines or blocks. This is using the calculator as a tool.

Example 3

If the clickometer had been opened at the beginning of step 3 in Example 1, then when the blocks window was opened several bars would appear to the right of the clickometer scale. These indicate the strategies available for demonstration on that calculation. The value of the number line to the left of each bar is the number of actions that would be necessary to complete the calculation by that strategy and is equivalent to the number of mouse clicks required to execute that strategy by hand in the interface. Assume that two bars appear in this case, one on 34 for the direct modelling strategy already executed and one on 18 for a counting strategy. Let us now say that a child is trying the counting strategy using the interface after seeing the same strategy executed by the calculator.

1. The child clicks on the 18 bar to choose the 18 action strategy. The 34 bar disappears and a new bar appears at the bottom of the clickometer to register the child's mouse clicks.

2. The child clicks on the blocks arena to make it the receiving arena. He keys then '1' below it then '9' on the right. This places nine units in an ordered array in the blocks arena.

3. The child uses the cursor to pick up five units one by one and place them in another part of the arena. The computer will count backwards from nine to five if the child clicks in the appropriate part of the arena (yet to be determined).

4. The clickometer registers each mouse click to show the number of actions which the child can compare with the target of eighteen.

5. After removal of the last unit from the group of nine the child clicks in the calculator slot and replaces the '?' with the answer '4'.

This is playing a game.

Example 4 Execution of a calculation in the mental arithmetic window 7.

1. The sum is input into the calculator slot as for example '67+38=?' After pressing 'go', three bars appear on the clickometer. These indicate the three mental arithmetic strategies available for demonstration. One is chosen by the child, for example a 'seven steps' mental arithmetic strategy.

2. As the 'seven steps' strategy is executed the following appear in sequence in the mental arithmetic window.

a) $67 = 60 + 7$
b) $38 = 30 + 8$
c) $30 + 60 = 90$
d) $7 = 2 + 5$
e) $2 + 8 = 10$
f) $10 + 90 = 100$
g) $100 + 5 = 105$ Each number fades out as it is decomposed or added to another number.

This is a demonstration.

Example 5

Suppose the mental arithmetic arena was being used to demonstrate the calculation as in Example 3.

If the blocks arena had also been opened in Example 3 with one click and it had been opened after the mental arithmetic window, or the mental arithmetic window had been clicked on twice to indicate it was the lead arena, then the blocks arena would emulate each step in the mental arithmetic arena. This is called mapping. Thus the calculation in the blocks arena would start with six rods and seven units in one part of the arena and three rods and eight units in another part. Then the sums (a) to (f) would be executed using the blocks. (The clickometer however only applies to the lead arena). In this case of executing the mapping, quantities are ordered close to a number line so that the quantity represented by the blocks is relatively easy to take in.

Example 6 Counting with the calculator.

In this example the calculator counts a collection.

1. The collection to be counted is input into the calculator slot, say 42. The clickometer and the blocks arena are open.

2. The child clicks on 'go' and say three counting methods are indicated, a slow one which will laboriously count out forty two units and a faster one which will count out four tens one at a time, and two units one at a time. Finally, the fastest method is to count out four tens together, then two units together.

3. The details for each follow the pattern laid down in the earlier Examples. This is also a demonstration.

Figs. 6 to 9 illustrate one possible form of the hand-held visual calculator and how it might be used. In this case the keyboard will be a real one. The keyboard shown here does not correspond exactly to that illustrated for the simulated calculator discussed above. The differences arise mainly from the absence of a mouse and the clickometer will therefore require a new name, say pressometer. Also the keyboard will not flash when the calculator is executing a demonstration. The main differences are as follows:-

1. The representation to be used is selected using keys.

blk - selects the calculating blocks representation.

fi - selects the finger line representation.

nl - selects the number line representation.

m - selects the mental arithmetic representation.

The standard arithmetic algorithms for multicolumn addition, and subtraction, and for long multiplication and long division can also be selected in this arena. The arrow keys replace the mouse and its pointing cursor. These arrow keys are for moving cursors around to select and position things and the 'p' key is for 'picking' and 'putting' blocks, digits and fingers etc. Two pairs of vertical arrow keys are required because each of the two number lines will simultaneously require a cursor. Where only one cursor is operational both pairs of keys have the same effect. These cursors are not shown in the Figures.

Figures 6 and 7 show paired mapping representations for the simple calculation 9-5 = ? with a simple 25 keypress counting strategy using the counting blocks where work on the strategy has reached the fourteenth keypress. Either of these Figures could separately represent the same stage in a demonstration or a game. If viewed as a demonstration the pressometer is absent from the fingers representation because the 25 steps applies to the blocks and not to the fingers, i.e. the blocks arena is leading. The fingers representation is selected by choosing a strategy from the pressometer with the blocks arena up and then switching to the finger lines by pressing the 'fi' key. If viewed as a game the absence of the pressometer in Fig. 7 makes the game less competitive and more a case of exploration or practice.

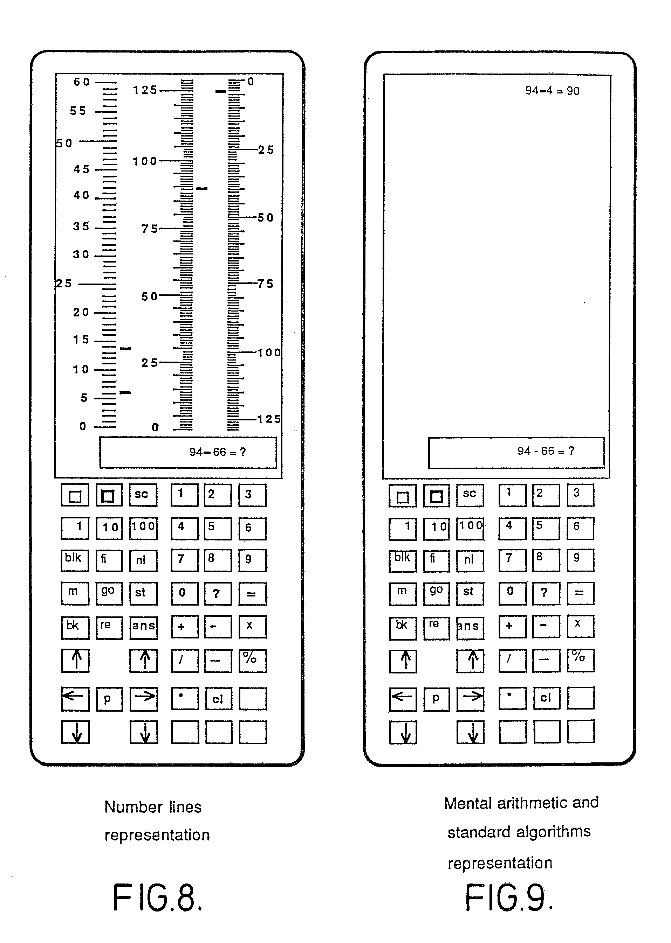

Figures 8 and 9 show paired mapping representations for 94-66 = ? with a 14 action strategy having been chosen. The number lines are the lead arena. As for the previous two Figures, either of these could separately represent the same stage in a demonstration or a game.

Figures 8 and 9 show paired mapping representations for the same calculation 94-66 = ? However in one case a standard arithmetic algorithm for subtraction has been selected in the mental arithmetic arena. In both cases the 'ans' key has been used to jump straight to the answer directly and the pressometer is therefore not displayed. This is using the calculator as a tool. In this case the problem and the answer is not given in the calculator slot at the bottom of the display but the user is required to put in a little mental effort to read the problem and the answer in the chosen representation. No effort is actually required in the case of the standard algorithm but some is required for the number line representation and would also be required when using the other arenas in this manner.

## Claims

1. A computational device comprising a visual display area and characterised by electronic means to display on the visual display area information concerning any selected calculation in at least one non-digital representational mode.

2. A computational device according to claim 1, characterised by key input means to select the non-digital representational mode to be displayed from a plurality of representational modes.

3. A computational device according to claim 2, characterised in that the plurality of representational modes includes digital representation.

4. A computational device according to claim 1,2 or 3, wherein the or each representational mode comprises a symbolic form.

5. A computational device according to any preceding claim, characterised in that one or more of the representational modes comprise a manner of demonstration of the information concerning the selected calculation.

6. A computational device according to claim 5, characterised in that the or each manner of demonstration comprises one or more of a demonstration of the steps in obtaining a calculation, the calculation equation, and the calculation answer.

7. A computational device according to claim 5 or 6, characterised in that the manner of demonstration comprises a game involving the selected calculation.

8. A computational device comprising a visual display area and characterised by key-actuated means to demonstrate as a guide on said display area how to carry out any selected calculation.

9. A computational device according to claim 8, characterised in that the demonstration is conducted in a selected one of a plurality of representational modes.

10. A computational device according to claim 9, characterised in that the or each representational mode comprises a symbolic form.

11. A computational device according to any preceding claim, characterised by means to select the use of a representational mode including means to teach numerical place value.

12. A computational device according to any preceding claim, characterised by means to replay the user's actions.

13. A computational device according to claim 12, characterised by means to replay backwards.

14. A computational device according to any preceding claim, including or for use with a curriculum of written problems and answers.

15. A computational device according to any preceding claim, characterised by a first visual display area for a calculation question, a second visual display area for the information in a non-digital representational mode, and a third visual display area for the information represented digitally.

16. A computational device according to any preceding claim, characterised by means to show the number of steps in the calculation when carried out by the user.

17. A computational device according to any of claims 1 to 15, characterised by means to show the number of steps in the calculation when demonstrated by the device.

SCREEN
3
1
4
KEYBOARD
2

FIG.1.

FIG.2.
Calculator slot
Mental arithmetic window
Keyboard
Number line
Spare line
Calculation blocks window
Finger line
Clickometer
5
6
7
8
10
11
st
cl
sc
go
?
-
=
+
100
10

16-11=?
16
1
2
3
4
5
6
7
8
9
0
=
+
-
?
go
st
cl
sc
10
100


FIG. 3.

6
7
8
3
2
1
6
5
4
9
8
7
+
=
0
go
?
-
sc
cl
st
100
10
ans
1
60
55
50
45
40
35
30
25
20
15
10
5
0

FIG. 4.

Calculator slot
6
Mental arithmetic window
7
Calculation blocks window
8
Number lines
Clickometer
log
ex
sc
re
go
cl
bk
st


FIG.5.

Calculating blocks representation

FIG.6.

Fingers representation

FIG.7.

60
55
50
45
40
35
30
25
20
15
10
5
0
125
100
75
50
25
0
0
25
50
75
100
125
94–66 = ?
sc
1
2
3
1
10
100
4
5
6
blk
fi
nl
7
8
9
m
go
st
0
?
=
bk
re
ans
+
-
x
/
%
p
cl

Number lines representation

FIG.8.

94–4 = 90

94 - 66 = ?

Mental arithmetic and standard algorithms representation

FIG.9.